Europäisches Patentamt

European Patent Office

Office européen des brevets

(19)

(11) Veröffentlichungsnummer: **0 293 819 B1**

(12) # EUROPÄISCHE PATENTSCHRIFT

(45) Veröffentlichungstag der Patentschrift: **25.09.91**

(51) Int. Cl.⁵: **B23D 45/04**

(21) Anmeldenummer: **88108668.0**

(22) Anmeldetag: **31.05.88**

(54) **Kaltkreissäge mit von unten her durch einen Schlitz einer Auflageplatte verschwenkbarem Sägeblatt.**

(30) Priorität: **05.06.87 DE 3718853**

(43) Veröffentlichungstag der Anmeldung:
**07.12.88 Patentblatt 88/49**

(45) Bekanntmachung des Hinweises auf die
Patenterteilung:
**25.09.91 Patentblatt 91/39**

(84) Benannte Vertragsstaaten:
**AT BE CH DE ES FR GB LI LU NL SE**

(56) Entgegenhaltungen:
**EP-A- 0 111 856**
**CH-A- 222 593**
**DE-A- 2 454 717**
**DE-C- 846 616**
**FR-A- 2 483 822**

(73) Patentinhaber: **Kaltenbach, Dieter**
**Rebweg 33**
**W-7850 Lörrach(DE)**

(72) Erfinder: **Kaltenbach, Dieter**
**Rebweg 33**
**W-7850 Lörrach(DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg(DE)**

## Beschreibung

Die Erfindung betrifft eine Kaltkreissäge, bei welcher das Sägeblatt beim Sägen von unten her durch einen Schlitz od. dgl. einer Auflageplatte eines Auflagetisches für das zu bearbeitende Material an einem gegenüber einem Schwenklager schwenkbaren Sägeblattarm mittels eines unter einem Hebelarm an dem Sägeblattarm angreifenden Vorschubantriebes nach oben verschwenkbar ist, wobei die Schwenkachse des Sägeblattes unterhalb der Auflagefläche und seitlich einer Spannstelle für das zu sägende Material angeordnet ist.

Eine derartige Kaltkreissäge ist beispielsweise aus der DE-A-24 54 717 bekannt. Durch die Anordnung der Schwenkachse des Sägeblattarmes seitlich der Spannstelle unterhalb des Auflagetisches wird erreicht, daß sich das Sägeblatt bei seinem Vorschub von unten nach oben auf einem Bogenbereich des Schwenkkreises befindet, der kaum von einer vertikalen Richtung abweicht. Entsprechend günstig kann die Einspannstelle gestaltet sein. Dabei laufen die Sägezähne während des Schnittes gegen die Schwenkachse und bewirken einen ziehenden Schnitt. Dadurch entsteht bezogen auf die Schwenkachse oder Schwenkwelle ein Drehmoment, dessen Größe vor allem auch durch die Länge des Schwenkarmes mitbestimmt wird. Dieses Drehmoment muß von dem Vorschubantrieb aufgenommen werden. Wird das Sägeblatt stärker belastet, erhöht sich dieses Drehmoment aufgrund der größeren Kraft an dem Hebelarm. Da vor allem durch wechselnde Querschnitte des zu sägenden Materiales starke Schwankungen der Vorschubkraft auftreten können, ergibt sich bei hoher Belastung des Sägeblattes ein unruhiger Schnittverlauf, der bis zu einem ratternden Schnitt führen kann.

Es besteht deshalb die Aufgabe, eine Kaltkreissäge der eingangs erwähnten Art zu schaffen, bei welcher die Belastung des Vorschubantriebes vermindert und der Schnittverlauf auch bei wechselndem Profilquerschnitt während des Sägeblattvorschubes ruhig gestaltet werden kann. Dennoch soll die vorteilhafte Anordnung des von unten nach oben schwenkbaren Sägeblattes mit unterhalb der Auflageplatte eines Auflagetisches angeordnetem Schwenklager beibehalten bleiben.

Die Lösung dieser scheinbar widersprüchlichen Aufgabe besteht darin, daß die Drehrichtung des Sägeblattes beim Sägen während des Vorschubes so gewählt ist,

daß sich die jeweils schneidenden Sägezähne vom Schwenklager des Sägeblattarmes weg bewegen. Die dadurch nun auftretenden Reaktionskräfte greifen unter einem viel kleineren Hebelarm an dem Schwenklager an oder können unter bestimmten Umständen sogar mit ihrer resultierenden durch dieses Schwenklager hindurchverlaufen, so daß ein von diesen Säge-Reaktionskräften gebildetes Drehmoment sehr klein ist oder unter Umständen ganz verschwindet. In vorteilhafter Weise führt dies zu einer Verringerung der erforderlichen Vorschubkräfte.

Zwar ist aus der DE-C-846 616 bereits eine Kreissäge bekannt, bei welcher das Sägeblatt an einem von unten nach oben hochschwenkbaren Schwenkarm befestigt ist. Diese Schwenkbewegung erfolgt jedoch vor dem eigentlichen Sägevorgang, während der Vorschub des Sägeblattes geradlinig mit Hilfe eines Schlittens durchgeführt wird. Somit ergibt sich während des Vorschubes an dem Schwenkantrieb keinerlei Änderung und somit auch kein sich änderndes Drehmoment.

Zweckmäßig ist es, wenn das Schwenklager des Schwenkarmes und insbesondere die Lagermitte auf dem Bereich zwischen den Linien angeordnet ist, auf welchen die resultierende Gegenkraft der Schnittkraft im Verlauf des Sägeblattvorschubes oder beim Einsatz von Sägeblättern unterschiedlicher Durchmesser verläuft. Wählt man für das Schwenklager eine Anordnung, in der das Sägeblatt etwa senkrecht hoch kommt, können sich mitunter nämlich sogar negative Werte an dem Vorschubantrieb dadurch ergeben, daß die resultierende der Schnittkraft auf einer abgewandten Seite des Schwenklagers verläuft. Auf jeden Fall ergibt sich aber eine sehr kleine Reaktionskraft. Der Vorschubantrieb greift dabei an dem Sägeblattarm an dessen freien Ende auf der der Sägeblattlagerung gegenüberliegenden Seite zu dem Schwenklager an. Die Verminderung der Belastung des Vorbschubantriebes und die ruhige Gestaltung des Schnittverlaufes bei wechselndem Profilquerschnitt kann besonders gut erreicht werden, wenn die resultierende Gegenkraft der Schnittkraft auf derselben Seite der Sägeblattmitte verläuft, auf der das Schwenklager angeordnet ist. Werden die geometrischen Verhältnisse des Sägeblattantriebes und seines Vorschubes also in dieser Weise gewählt, daß die resultierende Gegenkraft der Schnittkraft in der genannten Weise verläuft und dabei möglichst nahe oder gar durch das Schwenklager verläuft, wird der entsprechende an diesem Schwenklager wirkende Hebelarm und damit die entsprechende Belastung klein. Dies läßt sich besonders gut realisieren, wenn der Vorschubantrieb an dem Sägeblattarm an dessen freien Ende auf der der Sägeblattlagerung gegenüberliegenden Seite zu dem Schwenklager angreift.

Um die wechselnden, bisweilen sogar ins Negative gehenden Vorschubkräfte gut beherrschen zu können, ist es besonders vorteilhaft, wenn ein stangenförmiges Vorschubelement vorgesehen ist, welches durch einen insbesondere parallel zu ihm verlaufenden Arbeitszylinder zur Vermeidung oder Beseitigung von Spiel verspannt ist. Dabei kann der Verspannzylinder auf das Vorschubelement einer der jeweiligen Kraftrichtung des Vorschubelementes entgegengesetzte Kraft ausüben.

Zur besseren Einleitung der auftretenden Kräfte ist es vorteilhaft, wenn das Vorschubelement und der Verspannzylinder mit dem Maschinengestell bzw. Sägetisch durch eine innerhalb des Gehäuses angeordnete zusätzliche Wand od. dgl. Versteifung verbunden sind.

Das Vorschubelement kann -in an sich bekannter Weise-ein hydraulischer oder pneumatischer Vorschubzylinder oder ein mechanisches Vorschubelement in Form einer Spindel, vorzugsweise einer Kugel-Rollspindel, einer Zahnstange od. dgl. sein. Der zum Verspannen des Vorschubantriebes oder Vorschubelementes dienende, vorzugsweise hydraulische Arbeitszylinder kann in seiner Wirkrichtung insbesondere mittels eines Umsteuerventiles vorzugsweise beim Wechsel der Sägeblattgröße, der Schneide od. dgl. und einer sich daraus ergebenden Verschiebung der resultierenden Gegenkraft am Sägeblatt umkehrbar sein. Somit wird mit ein und demselben Element zum Verspannen des Vorschubes auch bei wechselnden Kraftrichtungen ein Spiel auf einfache Weise ausgeschlossen, wobei unter Umständen über Fühler od. dgl. eine sich ändernde resultierende Kraft festgestellt werden kann, so daß das Umsteuern des entsprechenden Ventiles selbsttätig erfolgen kann.

Insgesamt ergibt sich durch die Erfindung und deren Ausgestaltungsmöglichkeiten eine Kaltkreissäge mit günstigerer und verminderter Kraft am Vorschub, so daß auch Lager und Antriebselemente in kleinerer Dimensionierung vorgesehen werden können, die gesamte Maschine also verbilligt werden kann.

Die erfindungsgemäße Kaltkreissäge kann zusätzlich dahingehend ausgestaltet sein, daß sie für Schrägschnitte oder Gehrungsschnitte geeignet ist. Dazu kann die Auflageplatte und/oder der sie tragende Auflagetisch um eine vertikal zur Auflageplatte stehende Achse verdrehbar und in verdrehter Position festlegbar und mit dem Sägeblattantrieb und der Sägeblatthalterung verbunden sein. Um dabei die Vorteile der erfindungsgemäßen Drehrichtung des Sägeblattes beibehalten zu können, dennoch aber das Werkstück schnell und einfach festlegen und festspannen zu können, kann dabei eine Maßnahme von eigener erfinderischer Bedeutung vorgesehen sein, die darin bestehen kann, daß der auf der Auflageplatte befindliche feste Werkstückanschlag auf der dem Schwenklager des Sägeblattarmes zugewandten Seite der Sägeblattmitte angeordnet ist. Dies ergibt eine platzsparende Anordnung, bei welcher ein Werkstück nach wie vor trotz der erfindungsgemäßen Drehrichtung des Sägeblattes einfach und schnell zugeführt werden kann, obwohl bisher der feste Werkstückanschlag in der Regel auf der Seite eines Werkstückes vorgesehen wird, in welche dieses Werkstück durch die Schnittkraft ausweichen möchte.

Auf der dem Schwenklager abgewandten Seite der Sägeblattmitte kann ein verstellbarer Anschlag, eine Spannbacke od.dgl. für das Werkstück vorgesehen sein. Besonders zweckmäßig ist es dabei, wenn mit dem insbesondere drehbaren Sägetisch ein Spannstock verbunden ist, der die bewegliche Spannbacke oder den zustellbaren Anschlag aufweist.

Um dabei eine den vorgesehenen stoßenden Schnitt sicher beherrschende Einspannung des Werkstückes bei jeder Vorschubposition des Sägeblattes zu erhalten, ist es zweckmäßig, wenn die bewegliche zustellbare Spannbacke insbesondere an dem Spannstock od.dgl. von oben nach unten bewegbar und zustellbar ist, um ein Werkstück von oben her zu erfassen. Dadurch können von der besonderen Drehrichtung des Sägeblattes aus nach oben gerichtete Komponenten der Schnittkraft mit Sicherheit beherrscht werden.

Ferner ist es dabei zweckmäßig, wenn der Spannstock sowohl die von oben her zustellbare Spannbacke als auch einen gegen den festen Anschlag hin etwa horizontal verstellbaren Anschlag trägt. Damit läßt sich die etwa parallel zur Tischoberfläche gerichtete Komponente der Schnittkraft beherrschen.

Für eine schmale und gleichzeitig effektive Bauweise ist es besonders vorteilhaft, wenn der Spannstock um den Sägeblattbereich herumgreift und vor und/oder hinter der Sägeblattebene mit der Auflageplatte oder dem Auflagetisch verbunden oder verschraubt ist. Dadurch ist eine weitere vorteilhafte Ausgestaltung möglich, die zu einer möglichst schmalen und platzsparenden Bauweise und einer großen Nähe der Anschläge zum Sägeblatt und damit zu möglichst geringen Reaktionskräften führt und darin bestehen kann, daß der Spannstock vorzugsweise an seinen beiden etwa parallel zur Sägeblattebene verlaufenden Oberflächen oder wenigstens an einer dieser Oberflächen einen Anschlag zur Aufnahme der in horizontaler Richtung auftretenden Schnittkraft trägt, welcher Anschlag/Anschläge gleichzeitig die Sägeblattfläche teilweise abdecken. Somit wird in vorteilhafter Weise zusätzlich eine größere Unfallsicherheit erzielt.

Statt der festen Anschläge oder zusätzlich dazu können wenigstens ein oder mehrere horizontal wirkende Spannzylinder vorgesehen sein.

Der Spannstock kann auch zur Abstützung eines Schrägschnittanschlages mit insbesondere kreisbogenförmigem Widerlager dienen, der an einer außerhalb des Sägetisches angeordneten Stelle derart befestigt ist, daß er nicht seitlich verschiebbar ist. Dies führt zu einer zusätzlichen Stabilisierung und Versteifung und ist wichtig zur Unterbindung eventueller Vibrationen durch die besondere Schneidrichtung des Sägeblattes, die einen stoßenden Schnitt bedeutet.

Der Maschinensockel des Auflagetisches kann etwa kreisförmig sein, wodurch in besonders einfacher Weise realisiert werden kann, daß der gesamte Sägetisch drehbar an diesem Sockel gelagert sein kann.

Vor allem die Maßnahmen bezüglich des Spannstockes und seiner Ausbildung verbessern die erfindungsgemäße Kaltkreissäge bezüglich der schnellen und platzsparenden Spannmöglichkeiten auch bei Schrägschnitten und können so gestaltet sein, daß die häufig vorgeschriebene seitliche Abdeckung des Sägeblattes gleichzeitig durch die verstellbaren Anschläge bewirkt wird.

Nachstehend ist die Erfindung mit ihren ihr als wesentlich zugehörenden Einzelheiten anhand der Zeichnung noch näher beschrieben.

Es zeigt in schematisierter Darstellung :

Fig. 1    die Anordnung des Vorschubes und der Drehrichtung eines Sägeblattes nach herkömmlicher Art mit den sich ergebenden resultierenden Kräften,

Fig. 2    eine Darstellung der Fig. 1 jedoch mit gemäß der Erfindung umgekehrter Drehrichtung des Sägeblattes und den sich daraus ergebenden resultierenden Kräften,

Fig. 3    eine im Schnitt gehaltene Seitenansicht einer erfindungsgemäßen Kaltkreissäge, bei welcher im Maschinengestell eine aussteifende zusätzliche Wand zur Befestigung eines Vorschubelementes und eines Verspannzylinders vorgesehen ist,

Fig. 4    eine Draufsicht der Ausführungsform nach Fig. 3 mit einem Schnitt durch den festen Werkstückanschlag,

Fig. 5    eine Ausführungsform mit abgewandeltem Vorschubantrieb, bei welchem das Vorschubelement als Arbeitszylinder ausgebildet ist und mit einem Ende statt am Maschinengestell am Auflagetisch angreift,

Fig. 6    den Vorschubantrieb und einen Verspannzylinder gemäß Fig.5 nach einer gegenüber Fig. 5 erfolgten Umsteuerung,

Fig. 7    eine Anordnung und Darstellung gemäß Fig. 5, wobei als Vorschubelement ein Spindelantrieb vorgesehen ist,

Fig. 8    eine im Schnitt gehaltene Seitenansicht einer erfindungsgemäßen Kaltkreissäge, bei welcher auf der dem Schwenklager des Sägeblattarmes zugewandten Seite ein fester Anschlag bzw. ein Spannstock zur Abstützung eines auf der abgewandten Seite zustellbaren Anschlages vorgesehen ist,

Fig. 9    einen Horizontalschnitt gemäß der Linie A-A der in Fig. 8 dargestellten Kaltkreissäge,

Fig. 10   einen Horizontalschnitt gemäß der Linie B-B der in Fig. 8 dargestellten Kaltkreissäge und insbesondere der Spannmittel,

Fig. 11   einen der Fig. 10 entsprechenden Horizontalschnitt, wobei eine verdrehte Position zur Durchführung von Schrägschnitten dargestellt ist, sowie

Fig. 12   die Draufsicht eines relativ zu dem Spannstock verdrehten Auflagetisches und Sägeblattes in einer Position für Längsschnitte durch ein Werkstück.

Eine im ganzen mit 1 bezeichnete Kaltkreissäge weist einen Auflagetisch 2 mit einer Auflageplatte 3 auf, die einen Schlitz 4 hat. Auf die Auflageplatte 3 wird das zu sägende Material 5 aufgelegt. Das Sägeblatt 6 der Kaltkreissäge 1 kann nun von unten her durch den Schlitz 4 gegen das zu bearbeitende Material 5 mit Hilfe eines gegenüber einem Schwenklager 7 schwenkbaren Sägeblattarmes 8 und eines an dem Sägeblattarm 8 angreifenden Vorschubantriebes 9 nach oben verschwenkt werden. Es taucht dann allmählich über der Auflageplatte 3 auf und tritt dadurch gleichzeitig in das Material 5 ein. Das Schwenklager 7 befindet sich dabei unterhalb der Auflageplatte 3 und seitlich der Spannstelle 10 für das zu sägende Material 5.

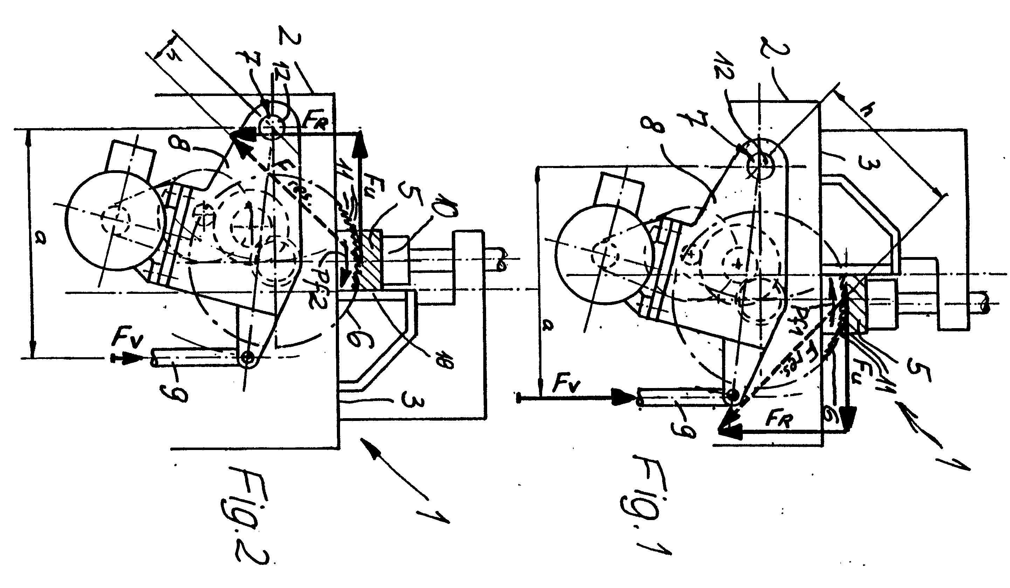

In Fig. 1 ist dargestellt, welche Kräfte und Hebelarme bei einer solchen Anordnung auftreten, wenn die Sägezähne 11 in üblicher Weise während des Schnittes gegen die Schwenkachse 12 des Schwenklagers 7 laufen, wie es durch den Pfeil Pf 1 in Fig. 1 angedeutet ist. Durch die Schnittkraft entsteht dann ein Drehmoment, bezogen auf die Schwenkwelle 12, dessen Größe das Produkt der resultierenden Kraft $F_{res}$ mit dem Hebelarm h ist. Die resultierende Kraft entsteht aus den beiden Reaktionskräften F u und F r, wobei erstere die unmittelbare Reaktionskraft im Schnittbereich und die zweite die Gegenkraft des Vorschubes ist. Man erkennt deutlich, daß also die Vorschubkraft F v wegen des entsprechend großen Hebelarmes a, unter welchem der Vorschubantrieb 9 an dem Sägeblattarm 8 gegenüber dessen Schwenklager 7 angreift, groß sein muß, um das entsprechend hohe Drehmoment zu erzeugen. Schwankungen dieser Vorschubkraft beispielsweise aufgrund wechselnder Querschnitte in dem zu sägenden Material 5 während des Vorschubes führen unter diesen Umständen zu einem unruhigen Schnittverlauf bzw. scgar zu einem ratternden Schnitt.

Gemäß Fig. 2 ist bei der erfindungsgemäßen Kaltkreissäge 1 die durch den Pfeil Pf 2 angedeutete Drehrichtung des Sägeblattes 6 beim Sägen so gewählt, daß sich die jeweils schneidenden Sägezähne 11 vom Schwenklager 7 des Sägeblattarmes 8 wegbewegen. Demgemäß ist die am Sägeblatt auftretende Reaktionskraft F u gegenüber der der Fig. 1 umgekehrt. Somit liegt die resultierende Kraft $F_{res}$ wesentlich näher am Schwenklager 7 und erzeugt aufgrund des viel geringeren Abstandes h ein geringeres Drehmoment. Somit braucht die Kraft F v des Vorschubes zur Kompensierung dieses Drehmomentes nur entsprechend klein zu sein.

Zweckmäßigerweise kann dabei das Schwenklager 7 des Schwenkarmes 8 und insbesondere die Lagermitte auf dem Bereich zwischen den Linien angeornded sein, auf welchen die resultierende Gegenkraft $F_{res}$ der Schnittkraft im Verlauf des Sägeblattvorschubes oder beim Einsatz von Sägeblättern unterschiedlicher Durchmesser verläuft. Durch die genannten Einflüsse wird nämlich die Lage dieser resultierenden Kraft unter Umständen etwas verschoben und kann sogar gegenüber Fig. 2 auf die andere Seite der Mitte der Schwenklagers 7 gelangen, wodurch sich dann die entsprechende Kraft am Vorschubantrieb sogar umkehren kann. Der Vorschubantrieb 9 greift dabei an dem Sägeblattarm 8 an dessen freiem Ende auf der der Sägeblattlagerung gegenüberliegenden Seite zu dem Schwenklager 7 an.

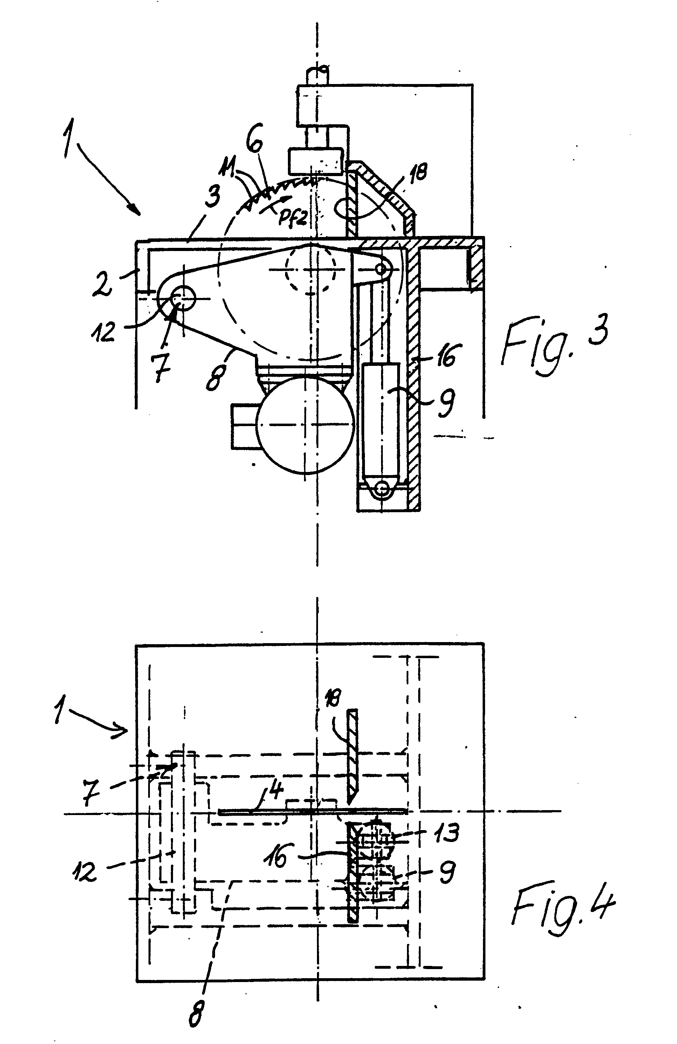

In allen Ausführungsbeispielen gemäß Fig.4, 5 und 7 ist ein stangenförmiges Vorschubelement vorgesehen, welches durch einen parallel zu ihm verlaufenden Arbeitszylinder 13 zur Vermeidung oder Beseitigung von Spiel verspannt ist. Dabei übt der Verspannzylinder 13 auf das Vorschubelement eine der jeweiligen Kraftrichtung des Vorschubelementes entgegengesetzte Kraft aus.

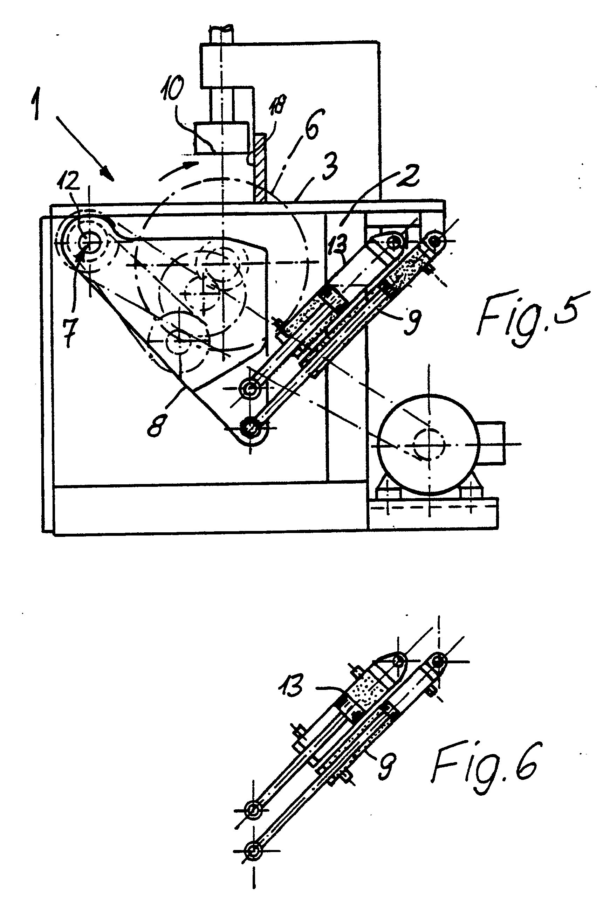

Da -wie bereits erwähnt- die aus der Schnittkraft resultierende Kraft $F_{res}$ bezüglich ihrer Lage zu dem Schwenklager 7 wechseln kann und sogar zu einer Umkehr der Kraft F v führen kann, ist gemäß den Fig. 5 und 6 vorgesehen, daß der zum Verspannen des Vorschubantriebes dienende, vorzugsweise hydraulische Verspannzylinder 13 in seiner Wirkrichtung mittels eines nicht näher dargestellten Umsteuerventiles z. B. beim Wechsel der Sägeblattgröße, der Schneide od. dgl. und einer sich daraus ergebenden Verschiebung der resultierenden Gegenkraft am Sägeblatt 6 umkehrbar ist. Dies wird besonders deutlich beim Vergleich der Fig. 5 und 6, die solche jeweils umgekehrten Spannungszustände darstellen.

Im Ausführungsbeispiel nach den Fig. 3 und 4 ist das als Arbeitszylinder ausgebildete Vorschubelement 9 und der Verspannzylinder 13 parallel zueinander mit dem Maschinengestell bzw. dem Sägetisch 2 durch eine innerhalb von dessen Gehäuse angeordnete zusätzliche Wand 16 verbunden, wobei diese Wand 16 eine zusätzliche Versteifung bewirkt.

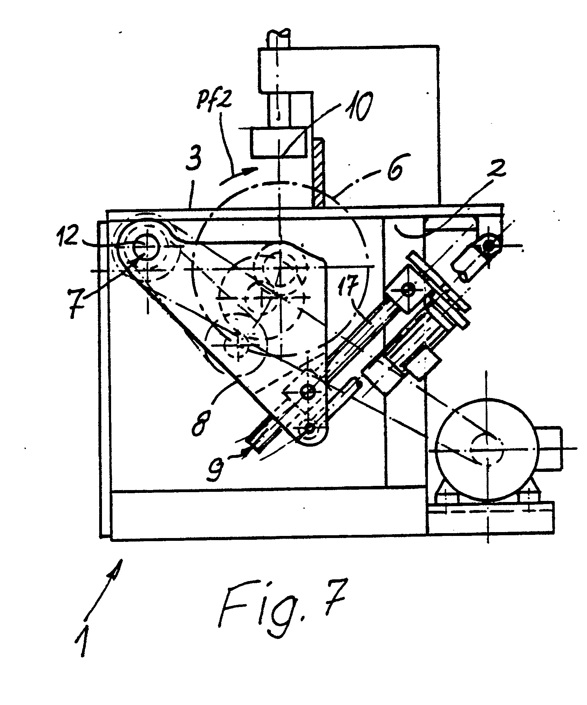

In den Fig. 5 bis 7 greift das Vorschubelement mit seinem dem Sägeblattarm 8 entgegengesetzten Ende nicht am Maschinengestell, sondern an einer Verlängerung der Auflageplatte 3 an. Dabei ist in Fig. 5 und 6 wiederum ein hydraulischer oder pneumatischer Vorschubzylinder 15, in Fig. 7 ein mechanisches Vorschubelement 17 in Form einer Spindel, vorzugsweise einer Kugel-Rollspindel vorgesehen.

Durch die Verkleinerung des Hebelarmes, unter welchem die resultierende der Schnittkraft am Schwenklager 7 des Sägeblattarmes 8 angreift, werden die entsprechenden Kräfte insbesondere bei Verwendung unterschiedlicher Sägeblätter, z. b. aus Schnellstahl oder Hartmetall und die daraus resultierenden unterschiedlichen Radialkräfte besser beherrschbar. Vor allem kann eine Erhöhung der Schnittkraft erzielt werden, ohne daß die Vorschubkraft entsprechend gesteigert werden muß. Selbst wechselnde, bisweilen ins Negative gehende Vorschubkräfte lassen sich auf diese Weise gut beherrschen und solche wechselnden Kräfte können auch an den Vorschubelementen keinen Nachteil bewirken, weil dort durch eine Verspannung ein eventuell vorhandenes Spiel jeweils beseitigt werden kann.

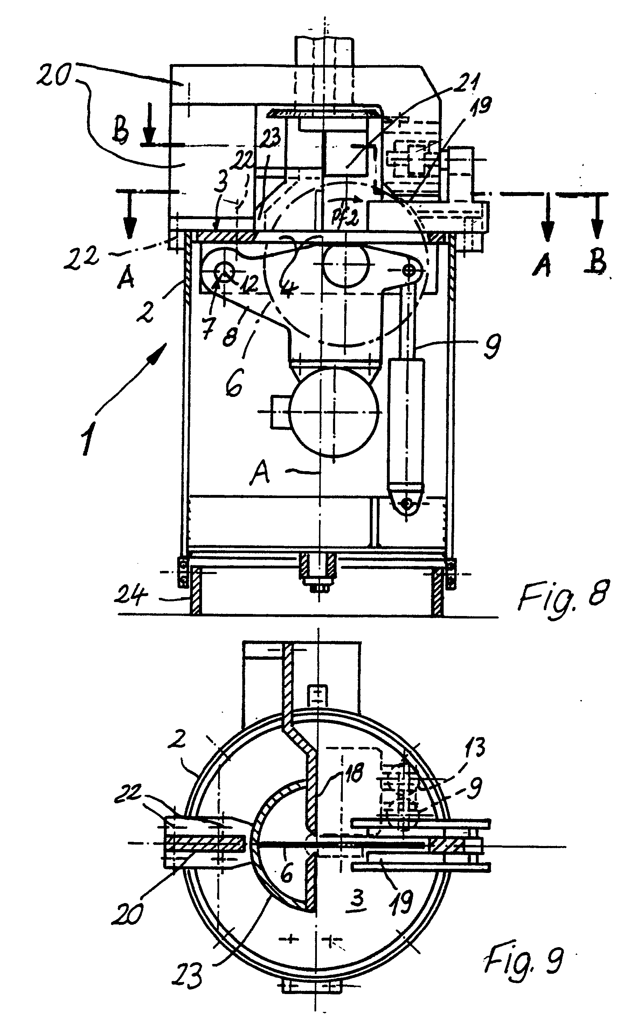

In den Figuren 8 bis 12 ist ein weiteres Ausführungsbeispiel einer erfindungsgemäßen Kaltkreissäge dargestellt, weshalb übereinstimmende Teile mit übereinstimmenden Bezugszahlen versehen und im folgenden nicht mehr alle erwähnt sind. Dabei erkennt man in Fig. 8 wiederum den Pfeil Pf2 zur Verdeutlichung der Drehrichtung des Sägeblattes 6, woraus sich wiederum ergibt, daß die resultierende Gegenkraft der Schnittkraft auf derselben Seite der Sägeblattmitte verläuft, auf der das Schwenklager 7 angeordnet ist.

Eine wesentliche Besonderheit dieser Ausführungsform besteht darin, daß die Auflageplatte 3 bzw. der sie tragende Auflagetisch 2 um eine vertikal zur Auflageplatte 3 stehende Mittelachse A verdrehbar und in verdrehter Position festlegbar ist und mit dem Sägeblattantrieb und der Sägeblatthalterung bzw. dem Sägeblattarm verbunden ist, so daß also das Sägeblatt 6 entsprechend mitverdreht wird. Somit kann eine Verdrehung relativ zu einem stangenförmigen Werkstück durchgeführt und an diesem ein schräger Schnitt angebracht werden.

Dennoch ist auch bei dieser Ausführungsform dafür gesorgt, daß eine sichere und möglichst vibrationsfreie Einspannung dieses Werkstückes trotz der gewählten Drehrichtung und Schneidrichtung des Sägeblattes 6 möglich ist, ohne daß die gesamte Konstruktion aufwendig wird und viel Platz benötigt.

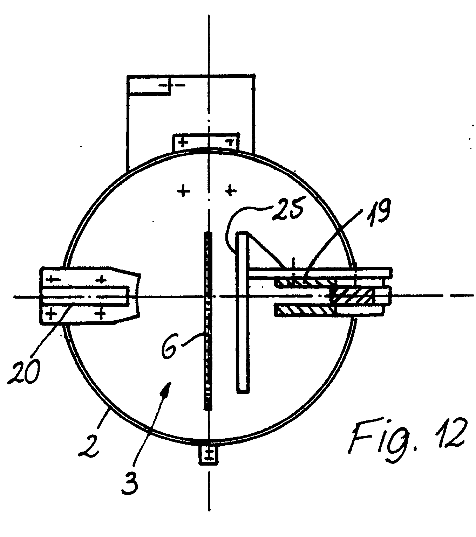

Man erkennt vor allem in den Figuren 8 bis 10, daß der auf der Auflageplatte 3 befindliche feste Werkstückanschlag 18, der bei dem vorhergehenden Ausführungsbeispiel gemäß Fig. 2 und 3 auf der dem Schwenklager 7 abgewandten Seite der Sägeblattmitte angeordnet ist, in diesem Falle der drehbaren Auflageplatte 3 auf der dem Schwenklager 7 des Sägeblattarmes 8 zugewandten Seite der Sägeblattmitte angeordnet ist. Fig. 11 verdeutlicht, daß dadurch problemlose Verdrehung des Auflagetisches 2 oder der Auflageplatte 3 bei feststehendem Anschlag 18 möglich ist, wozu die im folgenden noch näher zu erläuternden verstellbaren Werkstückanschläge und ihre Ausgestaltung beitragen.

Auf der dem Schwenklager 7 abgewandten Seite der Sägeblattmitte befindet sich ein verstellbarer Anschlag 19, eine Spannbacke od.dgl. für das Werkstück. Mit dem drehbaren Sägetisch 2 ist ein Spannstock 20 verbunden, der die bewegliche Spannbacke bzw. den zustellbaren Anschlag 19 aufweist und gemäß Fig. 8 den Sägebereich und den festen Anschlag 18 galgenförmig übergreift.

Eine bewegliche zustellbare Spannbacke 21 ist dabei an dem Spannstock 20 von oben nach unten bewegbar und zustellbar, um ein Werkstück auch von oben her zu erfassen. Ferner trägt der Spannstock 20 den gegen den festen Anschlag 18 hin etwa horizontal verstellbaren Anschlag 19.

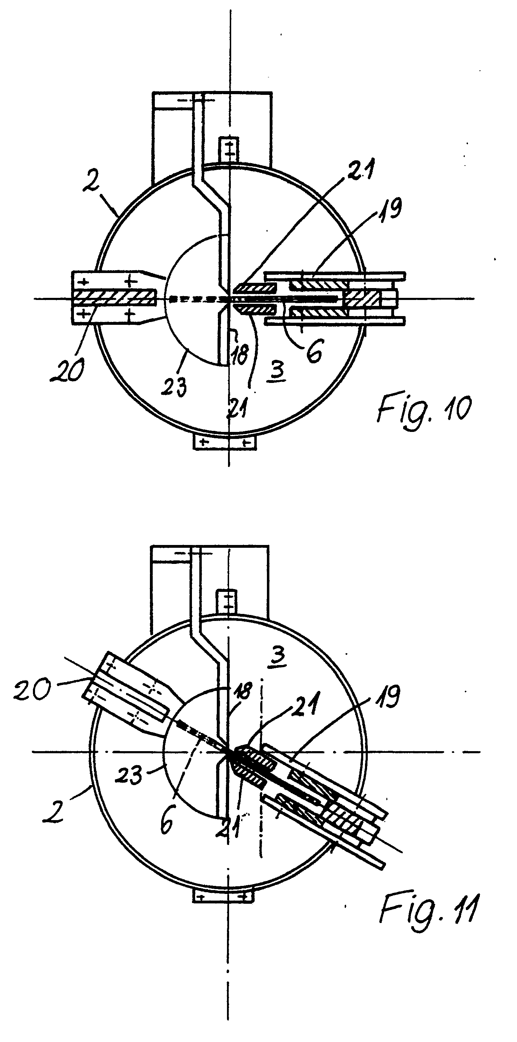

Der Spannstock 20 umgreift nicht nur den Sägeblattbereich, sondern ist gemäß den Figuren 9 und 10 vor und hinter der Sägeblattebene mit der Auflageplatte 3 oder dem Auflagetisch 2 verbunden bzw. verschraubt. Man erkennt die Schraubstellen 22 sowohl in Fig. 8 als auch in Fig. 9.

An seinen beiden etwa parallel zur Sägeblattebene verlaufenden Oberflächen trägt der Spannstock 20 den oder die schon erwähnten verstellbaren Anschläge 19 zur Aufnahme der in horizontaler Richtung auftretenden Schnittkraft, wobei in diesem Falle beidseits der Sägeblattebene jeweils ein solcher Anschlag 19 vorgesehen ist und z.B. gemäß Fig. 9 die Sägeblattflächen teilweise abdeckt, so daß besondere Abdeckvorrichtungen in diesem Bereich vermieden werden können.

Aus den Figuren 9 bis 11 wird deutlich, daß der Spannstock 20 im Ausführungsbeispiel zur Abstützung des als Schrägschnittanschlag ausgebildeten festen Anschlages 18 mittels eines kreisbogenförmigen Widerlagers 23 dient. Er ist dabei an einer außerhalb des Sägetisches 2 angeordneten Stelle derart befestigt, daß er nicht seitlich verschiebbar ist. Auch bei einer Verdrehung wird aufgrund der Kreisbogenform des Widerlagers 23 dieses gemäß Fig. 11 von dem Spannstock und seinem auf der Seite des Schwenklagers 7 befindlichen Tragteil in horizontaler Richtung abgestützt.

Die Figuren 9 bis 12 machen deutlich, daß der Maschinensockel 24 des Auflagetisches 2 etwa kreisförmig ist, so daß der gesamte Auflagetisch 2 relativ zu diesem Sockel 24 für Schrägschnitte verdreht werden kann. In Fig. 12 ist dabei noch angedeutet, daß die Drehung sogar soweit gehen kann, daß das Sägeblatt 6 in Orientierungsrichtung eines Werkstückes stehen und dieses der Länge nach durchsägen kann. Es ist dann zweckmäßig auf der Seite der beweglichen Anschläge eine Längsführung 25 zu installieren.

Die besondere Anordnung des festen Anschlages 18 auf der dem Schwenklager 7 zugewandten Seite der Sägeblatt-Mitte und die Halterung eines oder mehrerer zustellbarer Anschläge 19 und 21 an einem Spannstock 20 erlaubt somit, die Drehrichtung des Sägeblattes 6 wiederum so zu wählen, daß sich die jeweils schneidenden Sägezähne 11 vom Schwenklager 7 wegbewegen und den Sägeblattisch 2 oder die Auflageplatte 3 drehen zu können, so daß auch Schrägschnitte mit der genannten Schnittrichtung durchgeführt werden können. Somit können die Vorteile dieser Drehrichtung des Sägeblattes und der daraus resultierenden günstigen Schnittkräfte auch bei einer solchen Säge für Gehrungs- und Schrägschnitte zur Anwendung kommen, ohne daß die Spannmittel sehr aufwendig werden oder viel Platz benötigen.

## Patentansprüche

1. Kaltkreissäge (1) bei welcher das Sägeblatt (6) beim Sägen von unten her durch einen Schlitz (4) od. dgl. einer Auflageplatte (3) eines Auflagetisches (2) für das zu bearbeitende Material (5) an einem gegenüber einem Schwenklager (7) schwenkbaren Sägeblattarm (8) mittels eines unter einem Hebelarm an dem Sägeblattarm (8) angreifenden Vorschubantriebes (9) nach oben verschwenkbar ist, wobei das Schwenklager (7) des Sägeblattarmes (8) unterhalb der Auflageplatte (3) und seitlich einer Spannstelle (10) für das zu sägende Material (5) angeordnet ist, **dadurch gekennzeichnet,** daß die Drehrichtung des Sägeblattes (6) beim Sägen während des Vorschubes in Schwenkrichtung so gewählt ist, daß sich die jeweils schneidenden Sägezähne (11) vom Schwenklager (7) des Sägeblattamres (8) wegbewegen.

2. Kaltkreissäge nach Anspruch 1, dadurch gekennzeichnet, daß das Schwenklager (7) des Schwenkarmes (8) und insbesondere die Lagermitte auf dem Bereich zwischen den Linien angeordnet ist, auf welchen die resultierende Gegenkraft (F_res.) der Schnittkraft im Verlauf des Sägeblattvorschubes oder beim Einsatz von Sägeblättern unterschiedlicher Durchmesser oder Härte verläuft.

3. Kaltkreissäge nach Anspruch 1 oder 2, dadurch gekennzeichnet, daß die resultierende Gegenkraft der Schnittkraft auf derselben Seite der Sägeblattmitte verläuft, auf der das Schwenklager (7) angeordnet ist.

4. Kaltkreissäge nach einem der Ansprüche 1 bis 3, dadurch gekennzeichnet, daß der Vorschubantrieb (9) an dem Sägeblattarm (8) an dessen freien Ende auf der der Sägeblattlagerung gegenüberliegenden Seite zu dem Schwenklager (7) angreift.

5. Kaltkreissäge nach einem der Ansprüche 1 bis 4, dadurch gekennzeichnet, daß ein stangenförmiges Vorschubelement vorgesehen ist, welches durch einen insbesondere parallel zu ihm verlaufenden Arbeitszylinder (13) zur Vermeidung oder Beseitigung von Spiel verspannt ist.

6. Kaltkreissäge nach Anspruch 5, dadurch gekennzeichnet, daß der Verspannzylinder (13) auf das Vorschubelement (9; 17) eine der jeweiligen Kraftrichtung des Vorschubelementes entgegengesetzte Kraft ausübt.

7. Kaltkreissäge nach einem der vorstehenden Ansprüche, dadurch gekennzeichnet, daß das Vorschubelement (9) und der Verspannzylinder (13) mit dem Maschinengestell bzw. Sägetisch (2) durch eine innerhalb von dessen Gehäuse angeordnete zusätzliche Wand (16) od.dgl. Versteifung verbunden sind.

8. Kaltkreissäge nach einem der Ansprüche 1 bis 7, dadurch gekennzeichnet, daß das Vorschubelement ein hydraulischer oder pneumatischer Vorschubzylinder oder ein mechnisches Vorschubelement (17) in Form einer Spindel, vorzugsweise einer Kugel-Rollspindel, einer Zahnstange od.dgl. ist.

9. Kaltkreissäge nach einem der vorstehenden Ansprüche, dadurch gekennzeichnet, daß der zum Verspannen des Vorschubantriebes dienende, vorzugsweise hydraulische Verspannzylinder (13) in seiner Wirkrichtung insbesondere mittels eines Umsteuerventiles vorzugsweise beim Wechsel der Sägeblattgröße, der Schneide od.dgl. und einer sich daraus ergebenden Verschiebung der resultierenden Gegenkraft am Sägeblatt (6) umkehrbar ist.

10. Kaltkreissäge nach einem der Ansprüche 1 bis 9, dadurch gekennzeichnet, daß die Auflageplatte (3) und/oder der sie tragende Auflagetisch (2) um eine vertikal zur Auflageplatte (3) stehende Achse (A) verdrehbar und in verdrehter Position festlegbar ist und mit dem Sägeblattantrieb und der Sägeblatthalterung verbunden ist.

11. Kaltkreissäge für Schrägschnitte nach einem der Ansprüche 1 bis 10, dadurch gekennzeichnet, daß der auf der Auflageplatte (3) befindliche feste Werkstückanschlag auf der dem Schwenklager (7) des Sägeblattarmes (8) zugewandten Seite der Sägeblattmitte angeordnet ist.

12. Kaltkreissäge nach einem der Ansprüche 1 bis 11, dadurch gekennzeichnet, daß auf der dem Schwenklager (7) abgewandten Seite der Sägeblattmitte ein verstellbarer Anschlag (19), eine Spannbacke od.dgl. für das Werkstück vorgesehen ist.

13. Kaltkreissäge nach einem der Ansprüche 1 bis 12, dadurch gekennzeichnet, daß mit dem insbesondere drehbaren Sägetisch (2) ein Spannstock (20) verbunden ist, der die bewegliche Spannbacke oder den zustellbaren Anschlag (19) aufweist.

14. Kaltkreissäge nach einem der Ansprüche 1 bis 13, dadurch gekennzeichnet, daß die bewegliche zustellbare Spannbacke (21) insbesondere an dem Spannstock (20) od. dgl. von oben nach unten bewegbar und zustellbar ist, um ein Werkstück von oben her zu erfassen.

15. Kaltkreissäge nach einem der Ansprüche 1 bis 14, dadurch gekennzeichnet, daß der Spannstock (20) sowohl die von oben her zustellbare Spannbacke als auch einen gegen den festen Anschlag (18) hin etwa horizontal verstellbaren Anschlag (19) trägt.

16. Kaltkreissäge nach einem der Ansprüche 1 bis 15, dadurch gekennzeichnet, daß der Spannstock (20) um den Sägeblattbereich herumgreift und vor und/oder hinter der Sägeblattebene mit der Auflageplatte (3) oder dem Auflagetisch (2) verbunden oder verschraubt ist.

17. Kaltkreissäge nach einem der Ansprüche 1 bis 16, dadurch gekennzeichnet, daß der Spannstock (20) vorzugsweise an seinen beiden etwa parallel zur Sägeblattebene verlaufenden Oberflächen oder wenigstens an einer dieser Oberflächen einen Anschlag (19) zur Aufnahme der in horizontaler Richtung auftretenden Schnittkraft trägt, welcher Anschlag/Anschläge gleichzeitig die Sägeblattfläche teilweise abdecken.

18. Kaltkreissäge nach einem der Ansprüche 1 bis 17, dadurch gekennzeichnet, daß statt festen Anschlägen oder zusätzlich dazu wenigstens ein oder mehrere horizontal wirkende Spannzylinder vorgesehen sind.

19. Kaltkreissäge nach einem der Ansprüche 1 bis 18, dadurch gekennzeichnet, daß der Spannstock (20) auch zur Abstützung eines Schrägschnittanschlages mit insbesondere kreisbogenförmigem Widerlager (23) dient, der an einer außerhalb des Sägetisches (2) angeordneten Stelle derart befestigt ist, daß er nicht seitlich verschiebbar ist.

20. Kaltkreissäge nach einem der vorstehenden Ansprüche, dadurch gekennzeichnet, daß der Maschinensockel (24) des Auflagetisches (2) etwa kreisförmig ist.

**Claims**

1. A circular cold saw (1) wherein, during sawing, the saw (6) is upwardly pivotable on a saw arm (8) swivelling relative to a swivel bearing (7), the saw (6) being able to pivot from underneath so as to emerge through a slot (4) or the like in a support plate (3) of a support table (2) for the material (5) to be cut, said pivotal movement being performed by means of a feed drive (9) acting upon the saw arm (8) with a lever arm, the swivel bearing (7) of the saw arm (8) being arranged underneath the support plate (3) and to the side of a clamping point (10) for the material (5) to be sawn, **characterized in that** the direction in which the saw (6) rotates as it saws during the feed in the direction of swivel is selected in such a way that the saw teeth (11) cutting at the time move away from the swivel bearing (7) of the saw arm (8).

2. A circular cold saw as claimed in claim 1, characterized in that the swivel bearing (7) of the saw arm (8) and particularly the bearing centre is arranged on the area between the lines on which the resultant counteracting force ($F_{res.}$) of the cutting force runs in the course of the saw feed or in the use of saws of differing diameter or hardness.

3. A circular cold saw as claimed in claim 1 or claim 2, characterized in that the resultant counteracting force of the cutting force runs on the same side of the middle of the saw at which the swivel bearing (7) is arranged.

4. A circular cold saw as claimed in anyone of claims 1 to 3, characterized in that the feed drive (9) acts upon the free end of the saw arm (8) on that side of the saw support which is opposed to the swivel bearing (7).

5. A circular cold saw as claimed in any one of claims 1 to 4, characterized in that a bar-shaped feed element is provided which, for preventing or eliminating play, is braced by a working cylinder (13), particularly one running parallel thereto.

6. A circular cold saw as claimed in claim 5, characterized in that the bracing cylinder (13) exerts upon the feed element (9; 17) a force opposed to the respective direction of force of the feed element.

7. A circular cold saw as claimed in any one of the preceding claims, characterized in that the feed element (9) and the bracing cylinder (13) are connected to the machine frame and/or saw table (2) by an additional wall (16) or like stiffening arranged within the casing thereof.

8. A circular cold saw as claimed in any one of claims 1 to 7, characterized in that the feed element is a hydraulic or pneumatic feed cylinder or a mechanical feed element (17) in the form of a spindle, preferably a ball-roller type spindle, a rack or the like.

9. A circular cold saw as claimed in any one of the preceding claims, characterized in that the preferably hydraulic bracing cylinder (13) serving to brace the feed drive is reversible in its effective direction particularly by means of a reverse valve preferably in changing the size of saw, cutting edge or the like and an ensuing displacement of the resultant counteracting force at the saw (6).

10. A circular cold saw as claimed in any one of claims 1 to 9, characterized in that the support plate (3) and/or the support table (2) bearing the latter is twistable about an axis (A) vertical to the support plate (3), is arrestable in the twisted position and is connected to the saw drive and the saw holder.

11. A circular cold saw for angular cuts, as claimed in any one of claims 1 to 10, characterized in that the positive workpiece stop situated on the support plate (3) is arranged on that side of the middle of the saw which faces the swivel bearing (7) of the saw arm (8).

12. A circular cold saw as claimed in any one of claims 1 to 11, characterized in that an adjustable stop (19), a clamping jaw or the like for the workpiece is provided on that side of the middle of the saw which is averted from the swivel bearing (7).

13. A circular cold saw as claimed in any one of claims 1 to 12, characterized in that a vice (20) presenting the movable clamping jaw or the infeedable stop (19) is connected to the saw table (2), particularly the rotary saw table (2).

14. A circular cold saw as claimed in any one of claims 1 to 13, characterized in that the movable, in-feedable clamping jaw (21) is adapted to be moved and advanced from the top to the bottom particularly on the vice (20) or the like, in order for a workpiece to be gripped from above.

15. A circular cold saw as claimed in any one of claims 1 to 14, characterized in that the vice (20) bears both the clamping jaw in-feedable from above and a stop (19) adjustable approximately horizontally towards the positive stop (18).

16. A circular cold saw as claimed in any one of claims 1 to 15, characterized in that the vice (20) embraces the saw zone and is connected or bolted to the support plate (3) or support table (2) in front of and/or behind the plane of the saw.

17. A circular cold saw as claimed in any one of claims 1 to 16, characterized in that the vice (20), preferably on the two surfaces thereof running approximately parallel to the plane of the saw or at least on one of said surfaces, bears a stop (19) to sustain the cutting force occuring in the horizontal direction, which stop/stops simultaneously partly shield the saw face.

18. A circular cold saw as claimed in any one of claims 1 to 17, characterized in that instead of or in addition to positive stops there are at least one or more clamping cylinders provided which act horizontally.

19. A circular cold saw as claimed in any one of claims 1 to 18, characterized in that vice (20) also serves to support a stop for an angular cut with particularly a circular arc-shaped abutment (23), said stop being secured at a location outside the saw table (2) so as not to be laterally displaceable.

20. A circular cold saw as claimed in any one of the preceding claims, characterized in that the base (24) of the support table (2) is approximately circular.

**Revendications**

1. Scie circulaire à froid (1), dans laquelle, lors du sciage, la lame de scie (6) peut, à travers une fente (4) ou similaire d'une plaque d'appui (3) d'une table d'appui (2) pour le matériau à scier (5), et à l'aide d'un entraînement d'avance (9) agissant sous un bras de levier sur un bras de lame de scie (8), être pivotée de bas en haut sur le bras de lame de scie (8), qui peut luimême pivoter par rapport à un palier de pivotement (7), le palier de pivotement (7) du bras de lame de scie (8) étant disposé en dessous de la plaque d'appui (3) et sur le côté d'un point de serrage (10) pour le matériau à scier (5), **caractérisée** en ce que le sens de rotation de la lame de scie (6) lors du sciage, pendant l'avance dans la direction de pivotement, est choisi de telle sorte que les dents de scie (11) respectivement en action s'éloignent du palier de pivotement (7) du bras de lame de scie (8).

2. Scie circulaire à froid selon la revendication 1, caractérisée en ce que le palier de pivotement (7) du bras pivotant (8), et notamment le centre du palier, est disposé sur la région comprise entre les lignes sur lesquelles s'étend la force antagoniste résultante ($F_{res.}$) de la force de coupe au cours de l'avance de la lame de scie ou lors de l'utilisation de lames de scie de différents diamètres ou duretés.

3. Scie circulaire à froid selon la revendication 1 ou 2, caractérisée en ce que la force antagoniste résultante de la force de coupe s'étend, par rapport au milieu de la lame de scie, du côté où se trouve le palier de pivotement (7).

4. Scie circulaire à froid selon l'une des revendications 1 à 3, caractérisée en ce que l'entraînement d'avance (9) agit sur l'extrémité libre du bras de lame de scie (8) qui se trouve, par rapport au palier de montage de la lame de scie, du côté opposé au palier de pivotement (7).

5. Scie circulaire à froid selon l'une des revendications 1 à 4, caractérisée en ce qu'il est prévu un élément d'avance en forme de tige qui, afin d'éviter ou d'éliminer tout jeu, est étayé par un vérin de travail (13), qui s'étend notamment parallèlement à cet élément.

6. Scie circulaire à froid selon la revendication 5, caractérisée en ce que le vérin d'étayage (13) exerce sur l'élément d'avance (9; 17) une force opposée à la direction de force respective de l'élément d'avance.

7. Scie circulaire à froid selon l'une des revendications précédentes, caractérisée en ce que l'élément d'avance (9) et le vérin d'étayage (13) sont assemblés au bâti de la machine, ou encore à la table de sciage (2), par une paroi supplémentaire (16) ou autre élément de renforcement similaire, disposé à l'intérieur du carter de la machine.

8. Scie circulaire à froid selon l'une des revendications 1 à 7, caractérisée en ce que l'élément d'avance est un vérin d'avance hydraulique ou pneumatique, ou un élément d'avance mécanique (17) sous la forme d'une broche, de préférence une broche filetée à billes, d'une crémaillère ou similaire.

9. Scie circulaire à froid selon l'une des revendications précédentes, caractérisée en ce que la direction d'action du vérin d'étayage (13), de préférence hydraulique, qui sert à étayer l'entraînement d'avance, peut être inversée, notamment à l'aide d'une soupape d'inversion, et de préférence lors du remplacement de la taille de lame de scie, du tranchant ou similaire et d'un décalage de la force antagoniste résultante sur la lame de scie (6) qui fait suite à ce remplacement.

10. Scie circulaire à froid selon l'une des revendications 1 à 9, caractérisée en ce que la plaque d'appui (3), et/ou la table d'appui (2) qui la porte, peut tourner autour d'un axe (A) vertical par rapport à la plaque d'appui (3), et peut être fixée en position tournée, et est assemblée à l'entraînement de lame de scie et au support de lame de scie.

11. Scie circulaire à froid pour des coupes biaises, selon l'une des revendications 1 à 10, caractérisée en ce que la butée fixe de pièce à scier qui se trouve sur la plaque d'appui (3), est disposée, par rapport au milieu de la lame de scie, du côté tourné vers le palier de pivotement (7) du bras de lame de scie (8).

12. Scie circulaire à froid selon l'une des revendications 1 à 11, caractérisée en ce qu'une butée réglable (19), une mâchoire de serrage ou similaire pour la pièce à scier est prévue, par rapport au milieu de la lame de scie, du côté opposé au palier de pivotement (7).

13. Scie circulaire à froid selon l'une des revendications 1 à 12, caractérisée en ce qu'un bloc de serrage (20), qui présente la mâchoire de serrage mobile ou la butée réglable (19), est assemblé à la table de scie (2) notamment rotative.

14. Scie circulaire à froid selon l'une des revendications 1 à 13, caractérisée en ce que la mâchoire de serrage mobile et réglable (21) peut notamment être déplacée et réglée de haut en bas sur le bloc de serrage (20) ou similaire, afin de saisir une pièce à scier par le dessus.

15. Scie circulaire à froid selon l'une des revendications 1 à 14, caractérisée en ce que le bloc de serrage (20) porte tant la mâchoire de serrage réglable par le haut qu'une butée (19), déplaçable approximativement horizontalement en direction de la butée fixe (18).

16. Scie circulaire à froid selon l'une des revendications 1 à 15, caractérisée en ce que le bloc de serrage (20) entoure la région de la lame de scie, et est assemblé ou boulonné à la plaque d'appui (3) ou à la table d'appui (2) devant et/ou derrière le plan de la lame de scie.

17. Scie circulaire à froid selon l'une des revendications 1 à 16, caractérisée en ce que le bloc de serrage (20) porte, de préférence sur ses deux surfaces s'étendant approximativement parallèlement au plan de la lame de scie, ou au moins sur une de ces surfaces, une butée (19) pour recevoir la force de coupe apparaissant dans le sens horizontal, cette/ces butées recouvrant simultanément partiellement la face de la lame de scie.

18. Scie circulaire à froid selon l'une des revendications 1 à 17, caractérisée en ce qu'un ou plusieurs vérins de serrage agissant horizontalement sont prévus à la place des butées fixes, ou en plus de ces dernières.

19. Scie circulaire à froid selon l'une des revendications 1 à 18, caractérisée en ce que le bloc de serrage (20) sert également à soutenir une butée de coupe biaise, à l'aide d'une contre-butée (23) qui présente notamment une forme d'arc de cercle et qui est fixée en un endroit disposé à l'extérieur de la table de sciage (2), de telle sorte qu'elle ne peut pas être déplacée latéralement.

20. Scie circulaire à froid selon l'une des revendications précédentes, caractérisée en ce que le socle de machine (24) de la table d'appui (2) est approximativement circulaire.

EP 0 293 819 B1

Fig. 1

Fig. 2

Fig. 3

Fig. 4

Fig.5

Fig.6

Fig. 7

EP 0 293 819 B1

Fig. 8

Fig. 9

16

Fig. 10

Fig. 11

17

Fig. 12